# EUROPEAN PATENT APPLICATION

(11) **EP 4 632 024 A1**
(43) Date of publication of application: **15.10.2025**
(21) Application number: 23900763.6
(22) Date of filing: 11.12.2023
(51) Int. Cl.: C09D 175/04, C09D 175/12

(54) **COATING MATERIAL AND METHOD FOR FORMING COATING LAYER**

(30) Priority: 09.12.2022 JP 2022197521
(71) Applicant: NHK Spring Co., Ltd., Kanagawa 236-0004 (JP)
(72) Inventor: IBANO, Daisuke, Yokohama-shi, Kanagawa 236-0004 (JP); MATSUDA, Tsuyoshi, Yokohama-shi, Kanagawa 236-0004 (JP); KITAGAWA, Naoyuki, Yokohama-shi, Kanagawa 236-0004 (JP); ARISAKA, Norihumi, Yokohama-shi, Kanagawa 236-0004 (JP)
(74) Representative: DREISS Patentanwälte PartG mbB
(86) International application number: PCT/JP2023/044301
(87) International publication number: WO 2024/122654

(57) **Abstract**

A coating material including a macromolecular polyol and an isocyanate, in which a viscosity of the coating material at a time of discharge from a coating device is less than 1,000,000 mPa·s, and a viscosity of the coating material immediately after application to a surface to be coated that is at 25°C is more than 10,000 mPa·s, and a method for forming the coating layer using the same.

## Description

### Technical Field

The present disclosure relates to a coating material and a method for forming a coating layer.

### Background Art

Various springs are used in automobiles, railway vehicles, and the like. Many of these springs are made of steel, and their surfaces are usually coated with a coating material to impart corrosion resistance.

For example, Patent Document 1 discloses "a polyol composition for reacting with a polyisocyanate to obtain a polyurethane foam, the polyol composition being filled into a container, containing a polyol, a foaming agent, a catalyst, and a filler, and having a viscosity of 300 to 2,000 mPa·s at 25°C". Patent Document 1 also discloses that the viscosity is adjusted with a thickener.

### Prior Art Documents

### Patent Documents

Patent Document 1: Japanese Patent Application Laid-Open (JP-A) No. 2022-030312

### SUMMARY OF INVENTION

### Technical Problem

When the viscosity of the coating material is low, superior discharge characteristics are exhibited; however, sagging of the coating film after coating occurs, including in applications for springs. On the other hand, increasing the viscosity to suppress sagging of the coating film after coating leads to reduce discharge characteristics.

Therefore, the coating material is required to have discharge characteristics from a coating device and anti-sagging characteristics of the coating film after coating. In recent years, the demand for such characteristics has been increasing, but studies on how to meet the demand have not been sufficient.

Therefore, an object of the present disclosure is to provide a coating material that is excellent in discharge characteristics from a coating device and can suppress sagging of a coating film after coating, and a coating method using the coating material.

### Solution to Problem

Means for solving the above problem includes the following aspects.
<1> A coating material including
   a macromolecular polyol, and
   an isocyanate: in which
   a viscosity of the coating material at a time of discharge from a coating device is less than 1,000,000 mPa·s, and
   a viscosity of the coating material immediately after application to a surface to be coated that is at 25°Cis more than 10,000 mPa·s.
<2> The coating material according to <1>, in which a viscosity of the coating material immediately after application to a surface to be coated that is at 80°C is more than 10,000 mPa·s.
<3> The coating material according to <1> or <2>, in which a viscosity of the coating material immediately after application to a surface to be coated that is at 200°C is more than 10,000 mPa·s.
<4> The coating material according to any one of <1> to <3>, further including an organic amine compound.
<5> The coating material according to <4>, in which the organic amine compound is an organic amine compound having a total of two or more of at least one of a primary amine group or a secondary amine group.
<6> The coating material according to <5>, in which the organic amine compound having a total of two or more of at least one of a primary amine group or a secondary amine group is at least one selected from the group consisting of alicyclic amine compounds and aromatic amine compounds.
<7> The coating material according to <5> or <6>, in which the organic amine compound having a total of two or more of at least one of a primary amine group or a secondary amine group has a molecular weight of 500 or less.
<8> The coating material according to any one of <1> to <7>, for use in a spring.
<9> A method for forming a coating layer, the method including:
   a step of applying the coating material according to any one of <1> to <8> to a surface to be coated of a rotating object to be coated using a coating device, and
   a step of curing the coating material applied to the surface to be coated to form a coating layer.
<10> The method for forming a coating layer according to <9>, in which the object to be coated is a spring.

### Advantageous Effects of Invention

According to the present disclosure, there can be provided a coating material that is excellent in discharge characteristics from a coating device and can suppress sagging of a coating film after coating, and a coating method using the coating material.

### BRIEF DESCRIPTION OF DRAWINGS

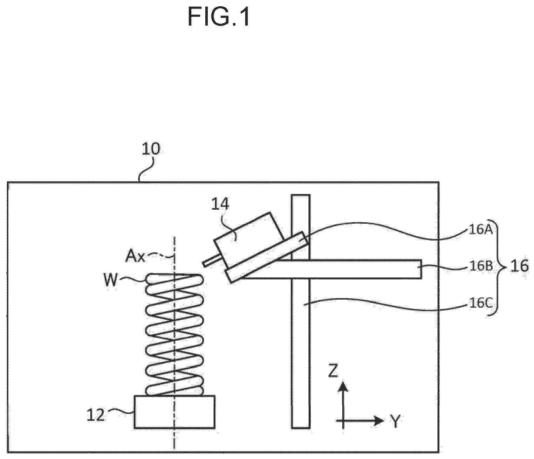

Fig. 1 is a schematic configuration diagram illustrating an example of a coating device used in a method for forming a coating layer according to the present embodiment.

### DESCRIPTION OF EMBODIMENTS

An exemplary embodiment of the present disclosure will be described below. These descriptions and examples are intended to illustrate the present disclosure and are not intended to limit the scope of the present disclosure.

In the present specification, a numerical range expressed using "to" represents a range including the numerical values stated before and after "to" as the minimum value and the maximum value, respectively.

In the numerical ranges described stepwise in the present specification, an upper limit value or a lower limit value stated in one numerical range may be replaced with an upper limit value or a lower limit value of another numerical range described stepwise. In a numerical range described in the present disclosure, the upper limit value or the lower limit value of the numerical range may be replaced with a value shown in the Examples.

In the present specification, each component may contain a plurality of substances corresponding thereto. In a case where the amount of each component is referred to in the present specification, if a plurality of substances corresponding to the component are present, the amount refers to the total amount of the plurality of substances unless otherwise specified.

A coating material according to the present embodiment includes (A) a macromolecular polyol and (B) an isocyanate, in which a viscosity of the coating material at a time of discharge from a coating device is less than 1,000,000 mPa·s, and a viscosity of the coating material immediately after application to a surface to be coated that is at 25°C is more than 10,000 mPa·s.

When the coating material according to the present disclosure satisfies the above characteristics, the coating material exhibits excellent discharge characteristics from a coating device, and sagging of the coating film after coating can be suppressed.

Hereinafter, details of the coating material according to the present embodiment will be described.

In the description, the viscosity of the coating material at a time of discharge from a coating device is also referred to as "viscosity immediately after discharge", and the viscosity of the coating material immediately after application to a surface to be coated is referred to as "viscosity immediately after application".

### (Viscosity Properties)

In the coating material according to the present embodiment, the viscosity of the coating material at a time of discharge from a coating device is less than 1,000,000 mPa·s. From the viewpoint of improving discharge characteristics, the viscosity of the coating material at a time of discharge from a coating device is preferably 800,000 mPa·s or less, and more preferably 700,000 mPa·s or less.

However, the lower limit of the viscosity of the coating material at a time of discharge from a coating device is preferably, for example, 1 mPa·s or more.

In the coating material according to the present embodiment, the viscosity of the coating material immediately after application to a surface to be coated that is at 25°C is more than 10,000 mPa·s, but from the viewpoint of suppressing coating film sagging after application, the viscosity is preferably more than 15,000 mPa·s, and more preferably more than 17,500 mPa·s.

However, the upper limit of the viscosity of the coating material immediately after application to a surface to be coated that is at 25°C is preferably 15,000,000 mPa·s or less from the viewpoint of smoothness of the coating layer.

In addition, the viscosity of the coating material immediately after application to a surface to be coated that is at 80°C or 200°C is preferably more than 10,000 mPa·s, more preferably more than 15,000 mPa·s, and still more preferably more than 17,500 mPa·s.

However, the upper limit of the viscosity of the coating material immediately after application to a surface to be coated that is at 80°C or 200°C is preferably 17,000,000 mPa·s or less, from the viewpoint of smoothness of the coating layer.

When the viscosity of the coating material immediately after application to a surface to be coated that is at 80°C or 200°C is within the above range, sagging of the coating film after application can be suppressed even when the surface to be coated is at a high temperature.

Here, from the viewpoint of improving the discharge characteristics and suppressing sagging of the coating film after coating, the viscosity of the coating material immediately after application to a surface to be coated that is at 25°C, 80°C, or 200°C is preferably higher than the viscosity of the coating material at a time of discharge from a coating device.

The viscosity of the coating material at a time of discharge from a coating device, and the viscosity of the coating material immediately after application to a surface to be coated, are measured as follows.

Among the components of the coating material, components other than the isocyanate are precisely weighed into a polycup, and stirred at 2,000 rpm for 5 minutes using a high-speed emulsifying/dispersing machine, T.K. Homodisper 2.5 type (DH-2.5/1001) manufactured by Primix Corporation. The components other than the stirred isocyanate and the isocyanate are mixed using a dispenser (MRP-500 manufactured by Nippon Sosey Kogyo Corporation) to obtain a sample of the coating material. At this time, the components other than isocyanate and the isocyanate are colored, and after mixing, it is confirmed whether the color of the mixture is uniform, and it is confirmed whether the components other than isocyanate and the isocyanate are uniformly mixed.

Subsequently, a sample having a liquid temperature of 25°C is discharged from a dispenser (MRP-500 manufactured by Nippon Sosey Kogyo Corporation) into a cup having a temperature of 25°C. Here, the discharge amount is an amount defined by the dispenser according to the viscosity range to be measured.

Next, within 10 seconds after the sample is discharged into the cup, the viscosity is measured using a B-type viscometer (manufactured by Brookfield) at a rotation speed of 0.3 rpm, every 2 seconds for 20 seconds.

Then, the viscosity after 10 seconds from the start of the measurement is defined as the viscosity of the coating material immediately after application to a surface to be coated that is at 25°C.

On the other hand, the viscosity measured every 2 seconds for 20 seconds from the start of measurement is plotted, and then the viscosity and the measurement time are linearly functionalized by the least squares method. Then, in the obtained linear function, the viscosity of the sample when the measurement time is 0 seconds is defined as the viscosity of the coating material at a time of discharge from a coating device.

In addition, the viscosity after 10 seconds from the start of measurement, which is measured in the same manner as in the above measurement method except that the temperature of the cup is set to 80°C or 200°C, is defined as the viscosity of the coating material immediately after application to a surface to be coated that is at 80°C or 200°C.

### (Composition)

The coating material according to the present embodiment contains (A) a macromolecular polyol and (B) an isocyanate. The coating material according to the present embodiment may contain (C) a chain extender and (D) a prepolymer obtained by reaction between a polyol and an isocyanate.

Here, the coating material according to the present embodiment preferably contains (E) an organic amine compound in addition to (A) the macromolecular polyol and (B) the isocyanate. When the coating material contains an organic amine compound, the organic amine compound and the isocyanate partially react with each other to form a urea compound having a urea bond. That is, the coating material according to the present embodiment preferably contains a urea compound obtained by reaction between an organic amine compound and an isocyanate. The reaction between an isocyanate and an organic amine compound that can form a urea bond is faster than the reaction between an isocyanate and a polyol that can form a urethane bond. Therefore, the viscosity immediately after application can be readily increased to such an extent that liquid sagging does not occur or a coating film shape is not deformed, while ensuring low viscosity at a time of discharge.

Therefore, when the organic amine compound is contained in the coating material, the viscosity at a time of discharge and the viscosity immediately after application can be readily controlled to be within the above ranges. As a result, excellent discharge characteristics from the coating device is exhibited, and sagging of the coating film after coating can be readily suppressed.

### -(A) Polyol-

(A) The macromolecular polyol preferably contains at least one selected from the group consisting of (A1) a polycarbonate-based polyol, (A2) a polyether-based polyol having a bisphenol structure, (A3) a lactone-based polyol, (A4) a polyester-based polyol, and (A5) a copolymer of a polycarbonate-based polyol and a lactone-based polyol.

Examples of (A1) the polycarbonate-based polyol include, for example, a polyol obtained by reaction between a glycol and an alkylene carbonate, a polyol obtained by reaction between glycol and diaryl carbonate, and a polyol obtained by reaction between a glycol and dialkyl carbonate.

Examples of the alkylene carbonate include, for example, ethylene carbonate, 1,2-propylene carbonate, and 1,2-butylene carbonate.

Examples of the diaryl carbonate include, for example, diphenyl carbonate, 4-methyldiphenyl carbonate, 4-ethyldiphenyl carbonate, 4-propyldiphenyl carbonate, 4,4'-dimethyldiphenyl carbonate, 2-tolyl-4-tolyl carbonate, 4,4'-diethyldiphenyl carbonate, 4,4'-dipropyldiphenyl carbonate, phenyltoluyl carbonate, bischlorophenyl carbonate, phenylchlorophenyl carbonate, phenylnaphthyl carbonate, and dinaphthyl carbonate.

Examples of the dialkyl carbonates include, for example, dimethyl carbonate, diethyl carbonate, di-n-propyl carbonate, diisopropyl carbonate, di-n-butyl carbonate, diisobutyl carbonate, di-t-butyl carbonate, di-n-amyl carbonate, and diisoamyl carbonate.

Examples of (A2) the polyether-based polyol having a bisphenol structure include a polyether polyol obtained by adding polyethylene oxide and/or polypropylene oxide to a cyclic diol (such as bisphenol A, hydrogenated bisphenol A, bisphenol S, or bisphenol P), a propylene oxide adduct of bisphenol A, an ethylene oxide adduct of bisphenol A, an ethylene oxide adduct of hydrogenated bisphenol A, and a propylene oxide adduct of hydrogenated bisphenol A.

Among these, as the polyether-based polyol, a propylene oxide adduct of bisphenol A is preferable.

Examples of (A3) the lactone-based polyol include ring-opening polymers of lactones (such as ε-caprolactone and β-methyl-δ-valerolactone).

Among these, a ring-opening polymer of caprolactone (caprolactone-based polyol) is preferable.

Examples of (A4) the polyester-based polyol include a condensation polyester-based polyol of a polybasic acid and a polyhydric alcohol other than a lactone-based polyol.

Examples of the polybasic acid include polyvalent carboxylic acids. Specific examples of the polybasic acid include phthalic acid, isophthalic acid, tetrahydrophthalic acid, tetrahydroisophthalic acid, hexahydrophthalic acid, hexahydroterephthalic acid, trimellitic acid, adipic acid, sebacic acid, succinic acid, azelaic acid, fumaric acid, maleic acid, itaconic acid, pyromellitic acid, and acid anhydrides thereof.

Examples of the polyhydric alcohol include glycols and polyhydric alcohols having a valence of 3 or more. Specific examples of the glycol include ethylene glycol, propylene glycol, diethylene glycol, triethylene glycol, tetraethylene glycol, dipropylene glycol, polyethylene glycol, polypropylene glycol, neopentyl glycol, hexylene glycol, 1,3-butanediol, 1,4-butanediol, 1,5-pentanediol, 1,6-hexanediol, 2-butyl-2-ethyl-1,3-propanediol, methylpropanediol, cyclohexanedimethanol, and 3,3-diethyl-1,5-pentanediol. Specific examples of the polyhydric alcohol having a valence of 3 or more include glycerin, trimethylolethane, trimethylolpropane, pentaerythritol, and dipentaerythritol.

Examples of (A5) the copolymer of a polycarbonate-based polyol and a lactone-based polyol include a copolymer of (A1) the polycarbonate-based polyol and (A3) the lactone-based polyol.

(A) The macromolecular polyol may be used singly or in combination of two or more kinds thereof.

The number average molecular weight of (A) the macromolecular polyol is preferably 300 to 12000, and more preferably 800 to 4000.

Here, the number average molecular weight is a molecular weight obtained from the measured hydroxyl value according to JIS K 0070 and the number of functional groups. The number average molecular weights of other components are also measured in the same manner.

### -(B) Isocyanate-

(B) Examples of the isocyanate include well-known polyisocyanates such as aromatic diisocyanates such as 2,4-tolylene diisocyanate, 2,6-tolylene diisocyanate, diphenylmethane diisocyanate, m-phenylene diisocyanate, p-phenylene diisocyanate, xylene-1,4-diisocyanate, 1,5-naphthylene diisocyanate, 1,4-naphthylene diisocyanate, and 3,3'-dichloro-4,4'-diphenylmethane diisocyanate; aliphatic diisocyanates such as hexamethylene diisocyanate, propylene-1,2-diisocyanate, and butylene-1,2-diisocyanate; and alicyclic diisocyanates such as isophorone diisocyanate, 4,4'-dicyclohexylmethane diisocyanate, and cyclohexylene diisocyanate.

(B) The isocyanate may be used singly or in combination of two or more kinds thereof.

Among these, at least one selected from the group consisting of diphenylmethane diisocyanate (MDI)-based isocyanate (such as 4.4'-MDI, 2.4'-MDI, 2.2'-MDI, crude MDI (cr-MDI), carbodiimide-modified MDI, polyol-modified MDI, etc.) and alicyclic diisocyanate (such as, 4,4'-dicyclohexylmethane diisocyanate, etc.) is preferable, from the viewpoint of improving discharge characteristics and suppressing coating film sagging after coating.

Here, the diphenylmethane diisocyanate (MDI)-based isocyanate is an isocyanate having a diphenylmethane diisocyanate skeleton.

When an MDI-based isocyanate and/or an alicyclic diisocyanate are used as the isocyanate, the viscosity at a time of discharge and the viscosity immediately after application are more easily adjusted as compared with an isocyanate other than an MDI-based isocyanate and an alicyclic diisocyanate. In addition, the strength required for the coating layer can be easily satisfied. Therefore, the isocyanate is preferably the MDI-based isocyanate or the alicyclic diisocyanate.

### -(C) Chain Extender-

Examples of (C) the chain extender include polyols having two to four functional groups and a molecular weight of from 60 to 300.

Examples of the polyols having two functional groups include aliphatic diols such as ethylene glycol, propylene glycol, butanediol, pentanediol, neopentyl glycol, methylpentanediol, hexanediol, heptanediol, octanediol, nonanediol, decanediol, or dodecanediol; cycloaliphatic diols such as cyclohexanediol or hydrogenated xylylene glycol; aromatic diols such as xylylene glycol; and polyether polyols obtained by the addition polymerization of alkylene oxides (such as ethylene oxide or propylene oxide) to divalent alcohols. The addition polymerization of plural kinds of alkylene oxides may be random addition polymerization or block addition polymerization.

Examples of the polyols having three functional groups include trihydric alcohols, for example, trihydric alcohols having 3 to 10 carbon atoms, such as glycerin or trimethylolpropane. Examples of the polyols having three functional groups also include polyether polyols obtained by addition polymerization of an alkylene oxide (such as ethylene oxide or propylene oxide) to a trihydric alcohol. The addition polymerization of plural kinds of alkylene oxides may be random addition polymerization or block addition polymerization.

Examples of polyols having four functional groups include polyether polyols obtained by addition polymerization of an alkylene oxide to ethylenediamine, pentaerythritol, or the like.

In addition, an ester-based polyol obtained by condensation of ethylene glycol or 1,4-butanediol of adipic acid and a short chain diol with a polyfunctional triol such as glycerin can be used as examples of a low molecular weight polyol.

(C) The chain extender may be used singly or in combination of two or more kinds thereof. The polyisocyanate may be reacted in advance as a prepolymer.

Among these, as (C) the chain extender, ethylene glycol, 1,4-butanediol, 1,6-hexanediol, trimethylolpropane, and glycerin are preferable, and 1,4-butanediol and 1,6-hexanediol are more preferable.

### [Composition Containing (D) Prepolymer obtained by Reacting Polyol with Isocyanate]

### -(D) Prepolymer-

The prepolymer is a prepolymer obtained by reaction between a polyol and an isocyanate.

Examples of the polyol include (A) the macromolecular polyol and the low molecular weight polyol exemplified in (C) the chain extender.

Examples of the isocyanate include (B) the isocyanate.

### -(E) Organic Amine Compound-

The organic amine compound is an organic substance having two or more amino groups in one molecule.

Preferable examples of the organic amine compound include a primary amine compound and a secondary amine compound. That is, the organic amine compound is preferably an organic amine compound having a total of two or more of at least one of a primary amine group or a secondary amine group.

When at least one of a primary amine compound or a secondary amine compound is applied as the organic amine compound, the viscosity at a time of discharge and the viscosity immediately after application are set within the above ranges, and improvement of discharge from the coating device and suppression of sagging of the coating film after coating can be readily realized.

From the same viewpoint, the organic amine compound is preferably at least one selected from the group consisting of alicyclic amine compounds and aromatic amine compounds.

From the same viewpoint, the molecular weight of the organic amine compound is preferably 500 or less, and more preferably 300 or less.

That is, the organic amine compound is at least one selected from the group consisting of an aromatic amine compound having a total of two or more of at least one of a primary amine group or a secondary amine group, and an alicyclic amine compound having a total of two or more of at least one of a primary amine group or a secondary amine group, and is preferably an amine compound having a molecular weight of 500 or less.

Suitable examples of the organic amine compound include diethyltoluenediamine, norbornanediamine, 4,4'-methylenebis [2-methylcyclohexanamine], trans-rich-1,4-bisaminomethylcyclohexane, 1,3-bisaminomethylcyclohexane, metaxylenediamine, or 3,3'-dimethyl-4,4'-diaminodicyclohexylmethane.

### -Other Components-

The coating material according to the present embodiment may contain other components.

Examples of other components include well-known additives such as a catalyst, a thickener, an antioxidant, a colorant, an ultraviolet absorber, and an inorganic filler (such as calcium carbonate).

In order to improve mechanical characteristics in a warm state, the heat resistance can be improved by making the structure of the resin itself more heat-resistant, or by adding a crosslinking agent or a reinforcing agent (such as CNT).

The coating material according to the present embodiment does not contain water, or even if water is contained, the content of water is preferably 1% by mass or less with respect to the coating material. When the coating material does not contain water, or when the amount of water is reduced, the viscosity at a time of discharge and the viscosity immediately after application are set within the above ranges, and improvement of discharge from the coating device and suppression of sagging of the coating film after coating can be readily realized.

### -Ratio of Components-

An equivalent ratio ((A+C)/(B+D)) of (A) the macromolecular polyol (or (A) the macromolecular polyol and (C) the chain extender) to (B) the isocyanate and (D) the prepolymer obtained by reaction between a polyol and an isocyanate is preferably from 0.5 to 1.5, or from 0.8 to 1.2.

The mass ratio (A/C) of (A) the macromolecular polyol to (C) the chain extender is preferably from 1.0 to 35.0, or from 1.5 to 10.0.

Here, the addition amount of the organic amine compound is selected so that the viscosity at a time of discharge and the viscosity immediately after application fall within the above ranges depending on the types of the organic amine compound and the isocyanate.

### (Method for Forming Coating Layer)

A method for forming a coating layer according to the present embodiment includes, for example,
a step of applying the coating material according to the present embodiment to a surface to be coated of an object to be coated using a coating device; and
a step of curing the coating material applied to the coating surface to form a coating layer.

Here, in the step of applying the coating material, an aspect in which the coating material according to the present embodiment is applied to a surface to be coated of a rotating object to be coated is exemplified.

Hereinafter, an example of a coating device used in the method for forming a coating layer according to the present embodiment will be described with reference to the drawings.

In the coating device shown in Fig. 1, an example in which a "coil spring" is applied as an object to be coated will be described.

As shown in Fig. 1, a coating device 10 includes a support base 12, a dispenser 14, and a mobile device 16.

Here, in the coating device 10 shown in Fig. 1, an axis along the vertical direction (the up-down direction in Fig. 1) is defined as a Z-axis (Fig. 1), and one of the two axes orthogonal to the Z-axis (the axis along the left-right direction in Fig. 1) is defined as a Y-axis (Fig. 1).

As shown in Fig. 1, the support base 12 supports a coil spring W. Specifically, the coil spring W is placed on the support base 12 in a posture in which the central axis of the coil spring W follows the Z-axis. The support base 12 includes a servo motor and the like, and is configured to be rotatable about a specific axis Ax (Fig. 1) that follows the central axis of the coil spring W. The specific axis Ax is an axis parallel to the Z-axis.

The dispenser 14 applies a coating material to the coil spring W. Note that a coating member other than the dispenser 14 may also be employed.

The mobile device 16 supports the dispenser 14 and moves the dispenser 14. As shown in Fig. 1, the mobile device 16 includes a slider 16A that supports the dispenser 14, a guide rail 16B extending along the Y-axis, a guide rail 16 extending along the Z-axis, a servo motor (not illustrated), and the like. In the mobile device 16, the slider 16A moves along the Y axis on the guide rail 16B, and the guide rail 16B moves along the Z-axis on a guide rail 16C. That is, the mobile device 16 moves the dispenser 14 only along the specific axis Ax and the Y-axis, respectively.

In the coating device shown in Fig. 1, the coil spring W is rotated by the support base 12. The mobile device 16 moves the dispenser 14 to a position where the coating material is to be applied to a predetermined application position. The dispenser 14 is operated to start applying the coating material from the dispenser 14 at the predetermined application position. Then, while the dispenser 14 is being moved by the mobile device 16, the coating material is applied to the entire surface of the coil spring W.

In addition to the coating device shown in Fig. 1, known coating devices such as a dip coating device, a spray coating device, a roller coating device, a brush coating method device, or a flow coater method device can be applied.

The method for forming a coating layer according to the present embodiment includes: applying the coating material according to the present embodiment to a surface to be coated of an object to be coated by a coating device; and then curing the coating material applied to the coating surface to form a coating layer.

The coating material is cured by, for example, heat treatment. The curing conditions of the coating material are implemented under well-known conditions depending on the composition of the coating material.

### (Application of Coating Material)

The coating material according to the present embodiment can be suitably applied as a coating material for forming a protective layer of, for example, a spring, a stabilizer, a bumper, or a building material (such as wall surface tile).

Among these, the coating material according to the present embodiment is typically applied as a coating material for use in a spring.

Specifically, the article according to the present embodiment has, on at least a part of a surface thereof, the coating layer of the coating material according to the present embodiment (that is, the cured product layer of the coating material).

The spring according to the present embodiment has, on at least a part of a surface thereof, the coating layer of the coating material according to the present embodiment (that is, the cured product layer of the coating material). The spring may be either a coil spring or a leaf spring.

Examples of aspects of providing the coating layer of the coating material according to the present embodiment (that is, the cured product layer of the coating material) include the following:
1) For the purpose of preventing abnormal noise due to contact between spring wires, the surface of a portion of a coil spring where the spring wires come into contact with each other;
2) For the purpose of coating protection, the surface of a seating part of a coil spring, or a part or the entire surface of the coil spring; and
3) For the purpose of impact relaxation and prevention of splintering, a part or the entire surface of an FRP leaf spring.

Here, in a case where the coating material according to the present embodiment is applied to a coil spring, the thickness of the cured product layer of the coating layer to be formed is preferably 0.5 mm or more (particularly from 1 mm to 2 mm).

### EXAMPLES

Examples of the present disclosure will be described below; however, the present disclosure is not limited to these examples in any way. In the following description, unless otherwise specified, "part(s)" and "%" relating to blending amounts (including content and additive amount) are all based on weight.

### <Examples 1 to 14 and Comparative Examples 1 to 20>

The components (excluding isocyanates) in the amounts (g) shown in Table 1, which has been preheated to 50°C, were precisely weighed into a polycup and stirred at 2000 rpm for 5 minutes using a high-speed emulsifying/dispersing machine, T.K. Homodisper 2.5 type (DH-2.5/1001) manufactured by Primix Corporation.

Subsequently, the obtained solution and the isocyanate were mixed using a dispenser (MRP-500 manufactured by Nippon Sosey Kogyo Corporation) at 3000 rpm and a discharge speed of 100% to prepare a coating material.

At this time, the obtained solution (the components other than the isocyanate) was mixed in a heated state at 40°C.

### <Evaluation>

The cured product of the obtained coating material of each example was evaluated as follows.

### (Viscosity at Time of Discharge and Viscosity Immediately after Application at Each Temperature)

The viscosity of the coating material of each example at a time of discharge and the viscosity immediately after application at each temperature were measured according to the method described above. The results are shown in Table 1.

In a case where the coating material was cured before the viscosity measurement and the viscosity could not be measured, it is indicated as "cured" in Table 1.

### (Discharge Characteristics)

The coating material of each example having a liquid temperature of 25°C was discharged from a dispenser (MRP-500 manufactured by Nippon Sosey Kogyo Corporation) in an amount corresponding to the viscosity measurement range.

Then, an evaluation was performed according to the following evaluation criteria.
A: In a case where the coating material could be satisfactorily discharged from the dispenser (the viscosity of the coating material at a time of discharge is 700,000 mPa·s or less)
B: In a case where the coating material could be discharged from the dispenser although there was a slight tendency to clogging (the viscosity of the coating material at a time of discharge is more than 700,000 mPa·s and 800,000 mPa·s or less)
C: In a case where the coating material could be discharged from the dispenser without any problem although some clogging occurred at a level without any problem (the viscosity of the coating material at a time of discharge is more than 800,000 mPa·s and less than 1,000,000 mPa·s)
D: In a case where the coating material could not be discharged from the dispenser (the viscosity of the coating material at a time of discharge is 1,000,000 mPa·s or more, or the coating material is cured)

### (Sagging of Coating Film)

The coating material of each example having a liquid temperature of 25°C was applied to a round bar having a diameter of 16 mm with a thickness of about 0.5 m from a dispenser (MRP-500 manufactured by Nippon Sosey Kogyo corporation), and then the round bar was heated to 25°C, 80°C, or 200°C and left for 10 seconds to confirm whether sagging occurred in the coating film.

Then, evaluation was performed according to the following evaluation criteria.
A: In a case where sagging of the coating film did not occur (the viscosity of the coating material immediately after application is more than 17,500 mmPa·s)
B: In a case where slight sagging of the coating film occurred (the viscosity of the coating material immediately after application is more than 15,000 mPa·s and 17,500 mPa·s or less)
C: In a case where some sagging of the coating film occurred at a level without any problem (the viscosity of the coating material immediately after application is more than 10,000 mPa·s and 15,000 mPa·s or less)
D: In a case where excessive sagging of the coating film occurred in the coating film (the viscosity of the coating material immediately after application is less than 10,000 mPa·s, or the coating material is cured), it was evaluated as "×".

The results are shown in Table 1.

Hereinafter, details of notations in Table 1 are as follows.

### -Macromolecular polyol-

· Capa 7203: Copolymer of a polycarbonate-based polyol and a lactone-based polyol ("Capa 7203" manufactured by Ingevity Corporation)
· G4672: Polycarbonate-based polyol ("G 4672" manufactured by Asahi Kasei Corporation)

### -Chain Extender-

- 14BG: 1,4-Butanediol ("14 BG" manufactured by Mitsubishi Chemical Group Corporation)

### -Isocyanate-

- MP-102: 1,4-Diphenylmethane diisocyanate ("MP-102" manufactured by BASF INOAC Polyurethanes Ltd.)
- Coronate MX: 1,4-Diphenylmethane diisocyanate ("Coronate MX" manufactured by Tosoh Corporation)
- IPDI: Isophorone diisocyanate

### -Organic Amine Compound-

- DETDA: Diethyltoluenediamine ("DETDA-80" manufactured by Albemarle Corporation) (see the following formula) 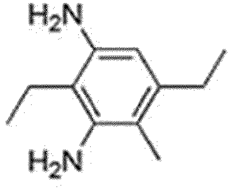
- NBDA: Norbornanediamine ("Norbornanediamine" manufactured by MITSUI FINE CHEMICALS, INC.) (see the following formula) 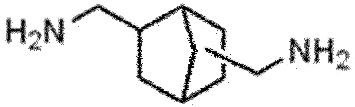
- EC-331: 4,4'-Methylenebis [2-methylcyclohexanamine] ("EC-331" manufactured by BASF) (see the following formula) 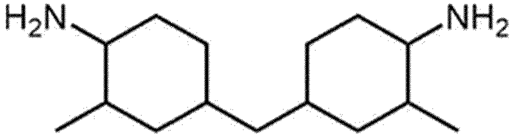
- 1'3-BAC: 1,3-Bisaminomethylcyclohexane ("1'3-BAC" manufactured by Mitsubishi Gas Chemical Company, Inc.) (see the following formula) 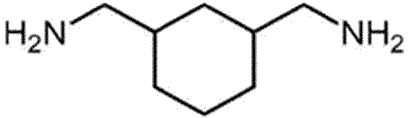
- 1'4-BACT: (" 1'4-BACT" manufactured by Mitsubishi Gas Chemical Company, Inc.) (see the following formula) 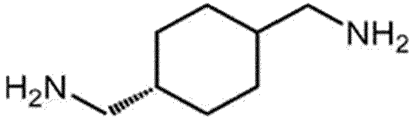
- MXDA: Meta-xylenediamine ("MXDX" manufactured by Mitsubishi Gas Chemical Company, Inc.) (see the following formula) 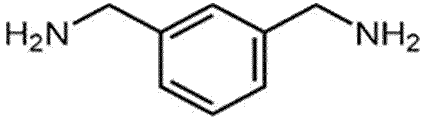
- EC303: Polyetheramine ("EC-303" manufactured by BASF) (see the following formula)

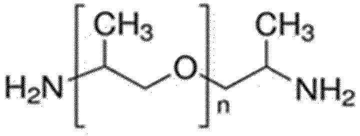

### -Amine Catalyst-

- DBU: Diazabicycloundecene ("DBU" manufactured by San-Apro Ltd.) (see the following formula)

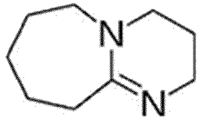

### -Thickener-

- SH-290: Amide thickener ("SH-290" manufactured by Kyoeisha Chemical Co., Ltd.)
- RCM-100: Liquid thickener ("RCM-100" manufactured by Kyoeisha Chemical Co., Ltd.)

The results of the various tests are listed below in Table 1.

**Table 1**

| | | | Comparative Example 1 | Comparative Example 2 | Example 1 | Example 2 | Example 3 | Example 4 |
|---|---|---|---|---|---|---|---|---|
| | Macromolecular polyol | Capa7203 | 17 | 17 | 17 | 17 | 17 | |
| | | G4672 | | | | | | 17 |
| | Chain extender | 14BG | 4.3 | 4.3 | 4.3 | 4.3 | 4.3 | 4.3 |
| | Isocyanate | MP-102 | 22 | 22 | 22 | 22 | | 22 |
| | | Coronate MX | | | | | 17 | |
| | | IPDI | | | | | | |
| | Amine | DETDA | | 0.1 | 0.2 | 0.3 | 0.3 | 0.3 |
| | | NBDA | | | | | | |
| Component | | EC331 | | | | | | |
| | | 1'3-BAC | | | | | | |
| | | 1'4-BACT | | | | | | |
| | | MXDA | | | | | | |
| | | EC303 | | | | | | |
| | Amine catalyst | DBU | | | | | | |
| | Thickener | SH-290 | | | | | | |
| | | RCM-100 | | | | | | |
| | Organic amine compound used Molecular weight | | - | 178.28 | 178.28 | 178.28 | 178.28 | 178.28 |
| | Organic amine compound used Type | | - | Primary aromatic | Primary aromatic | Primary aromatic | Primary aromatic | Primary aromatic |
| At a time of discharge | | Evaluation | A | A | A | A | A | A |
| Sagging of coating film | 25°C | | D | D | A | A | A | A |
| | 80°C | | D | D | C | A | A | A |
| | 200°C | | D | D | D | A | A | A |
| At a time of discharge | | Viscosity mPa·s | 2,000 | 2,500 | 4,000 | 5,000 | 4,500 | 6,000 |
| Immediately after application | 25°C | | 2,000 | 5,000 | 45,000 | 90,000 | 95,000 | 110,000 |
| | 80°C | | Less than 2,000 | Less than 2,000 | 12,500 | 60,000 | 70,000 | 83,000 |
| | 200°C | | Less than 2,000 | Less than 2,000 | 8,000 | 42,000 | 47,500 | 66,000 |

**Table 1-Continued**

| | | | Example 5 | Comparative Example 3 | Example 6 | Example 7 | Example 8 | Comparative Example 4 |
|---|---|---|---|---|---|---|---|---|
| | Macromolecular polyol | Capa7203 | 17 | 17 | 17 | 17 | 17 | 17 |
| | | G4672 | | | | | | |
| | Chain extender | 14BG | 4.3 | 4.3 | 4.3 | 4.3 | 4.3 | 4.3 |
| | Isocyanate | MP-102 | 22 | | | 22 | 22 | 22 |
| | | Coronate MX | | | | | | |
| | | IPDI | | 17 | 17 | | | |
| | Amine | DETDA | 0.8 | 2.5 | 5 | 1.4 | 1.5 | 1.6 |
| | | NBDA | | | | | | |
| Component | | EC331 | | | | | | |
| | | 1'3-BAC | | | | | | |
| | | 1'4-BACT | | | | | | |
| | | MXDA | | | | | | |
| | | EC303 | | | | | | |
| | Amine catalyst | DBU | | | | | | |
| | Thickener | SH-290 | | | | | | |
| | | RCM-100 | | | | | | |
| | Organic amine compound used Molecular weight | | 178.28 | 178.28 | 178.28 | 178.28 | 178.28 | 178.28 |
| | Organic amine compound used Type | | Primary aromatic | Primary aromatic | Primary aromatic | Primary aromatic | Primary aromatic | Primary aromatic |
| At a time of discharge | | Evaluation | A | A | A | B | C | D |
| Sagging of coating film | 25°C | | A | D | A | A | A | A |
| | 80°C | | A | D | A | A | A | A |
| | 200°C | | A | D | A | A | A | A |
| At a time of discharge | | Viscosity mPa·s | 8,500 | Less than 2,000 | 9,500 | 710,000 | 810,000 | 1,000,000 |
| Immediately after application | 25°C | | 805,000 | 2,000 | 29,000 | 790,000 | 10,000,000 | 12,000,000 |
| | 80°C | | 900,000 | 2,000 | 41,000 | 990,000 | 11,100,000 | 12,500,000 |
| | 200°C | | 979,000 | Less than 2,000 | 47,000 | 1,265,000 | 15,000,000 | 16,000,000 |

**Table 1-Continued**

| | | | Comparative Example 5 | Example 9 | Example 10 | Comparative Example 6 |
|---|---|---|---|---|---|---|
| | Macromolecular polyol | Capa7203 | 17 | 17 | 17 | 17 |
| | | G4672 | | | | |
| | Chain extender | 14BG | 4.3 | 4.3 | 4.3 | 4.3 |
| | Isocyanate | MP-102 | 22 | 22 | 22 | 22 |
| | | Coronate MX | | | | |
| | | IPDI | | | | |
| | Amine | DETDA | | | | |
| Component | | NBDA | 0.1 | 0.3 | 0.4 | 2.5 |
| | | EC331 | | | | |
| | | 1'3-BAC | | | | |
| | | 1'4-BACT | | | | |
| | | MXDA | | | | |
| | | EC303 | | | | |
| | Amine catalyst | DBU | | | | |
| | Thickener | SH-290 | | | | |
| | | RCM-100 | | | | |
| | Organic amine compound used Molecular weight | | 154 | 154 | 154 | 154 |
| | Organic amine compound used Type | | Primary alicyclic | Primary alicyclic | Primary alicyclic | Primary alicyclic |
| At a time of discharge | | Evaluation | A | A | A | D |
| Sagging of coating film | 25°C | | D | B | A | A |
| | 80°C | | D | D | A | A |
| | 200°C | | D | D | A | A |
| At a time of discharge | | Viscosity mPa·s | 2,200 | 6,000 | 40,000 | Cured |
| Immediately after application | 25°C | | Less than 2,000 | 16,500 | 73,000 | Cured |
| | 80°C | | Less than 2,000 | 4,800 | 80,000 | Cured |
| | 200°C | | Less than 2,000 | Less than 2,000 | 101,000 | Cured |

**Table 1-Continued**

| | | | Comparative Example 7 | Example 11 | Comparative Example 8 |
|---|---|---|---|---|---|
| | Macromolecular polyol | Capa7203 | 17 | 17 | 17 |
| | | G4672 | | | |
| | Chain extender | 14BG | 4.3 | 4.3 | 4.3 |
| | Isocyanate | MP-102 | 22 | 22 | 22 |
| | | Coronate MX | | | |
| | | IPDI | | | |
| | Amine | DETDA | | | |
| | | NBDA | | | |
| | | EC331 | 0.2 | 0.6 | 2.8 |
| Component | | 1'3-BAC | | | |
| | | 1'4-BACT | | | |
| | | MXDA | | | |
| | | EC303 | | | |
| | Amine catalyst | DBU | | | |
| | Thickener | SH-290 | | | |
| | | RCM-100 | | | |
| | Organic amine compound used Molecular weight | | 238.41 | 238.41 | 238.41 |
| | Organic amine compound used Type | | Primary alicyclic | Primary alicyclic | Primary alicyclic |
| At a time of discharge | | Evaluation | A | A | D |
| Sagging of coating film | 25°C | | D | A | A |
| | 80°C | | D | A | A |
| | 200°C | | D | A | A |
| At a time of discharge | | Viscosity mPa·s | 2,000 | 39,000 | Cured |
| Immediately after application | 25°C | | Less than 2,000 | 68,000 | Cured |
| | 80°C | | Less than 2,000 | 70,500 | Cured |
| | 200°C | | Less than 2,000 | 74,000 | Cured |

**Table 1-Continued**

| | | | Comparative Example 9 | Example 12 | Comparative Example 10 | Comparative Example 11 | Example 13 |
|---|---|---|---|---|---|---|---|
| | Macromolecular polyol | Capa7203 | 17 | 17 | 17 | 17 | 17 |
| | | G4672 | | | | | |
| | Chain extender | 14BG | 4.3 | 4.3 | 4.3 | 4.3 | 4.3 |
| | Isocyanate | MP-102 | 22 | 22 | 22 | 22 | 22 |
| | | Coronate MX | | | | | |
| | | IPDI | | | | | |
| | Amine | DETDA | | | | | |
| Component | | NBDA | | | | | |
| | | EC331 | | | | | |
| | | 1'3-BAC | 0.1 | 0.4 | 2.5 | | |
| | | 1'4-BACT | | | | 0.01 | 0.4 |
| | | MXDA | | | | | |
| | | EC303 | | | | | |
| | Amine catalyst | DBU | | | | | |
| | Thickener | SH-290 | | | | | |
| | | RCM-100 | | | | | |
| | Organic amine compound used Molecular weight | | 142.25 | 142.25 | 142.25 | 142.24 | 142.24 |
| | Organic amine compound used Type | | Primary alicyclic | Primary alicyclic | Primary alicyclic | Primary alicyclic | Primary alicyclic |
| At a time of discharge | | Evaluation | A | A | D | A | A |
| Sagging of coating film | 25°C | | D | A | A | D | A |
| | 80°C | | D | A | A | D | A |
| | 200°C | | D | A | A | D | A |
| At a time of discharge | | Viscosity mPa·s | 2,350 | 36,000 | Cured | 2,500 | 47,000 |
| Immediately after application | 25°C | | 2,300 | 61,000 | Cured | 2,430 | 82,500 |
| | 80°C | | Less than 2,000 | 82,000 | Cured | Less than 2,000 | 98,500 |
| | 200°C | | Less than 2,000 | 88,000 | Cured | Less than 2,000 | 120,000 |

**Table 1-Continued**

| | | | Comparative Example 12 | Comparative Example 13 | Example 14 | Comparative Example 14 |
|---|---|---|---|---|---|---|
| | Macromolecular polyol | Capa7203 | 17 | 17 | 17 | 17 |
| | | G4672 | | | | |
| | Chain extender | 14BG | 4.3 | 4.3 | 4.3 | 4.3 |
| | Isocyanate | MP-102 | 22 | 22 | 22 | 22 |
| | | Coronate MX | | | | |
| | | IPDI | | | | |
| | Amine | DETDA | | | | |
| | | NBDA | | | | |
| Component | | EC331 | | | | |
| | | 1'3-BAC | | | | |
| | | 1'4-BACT | 2.5 | | | |
| | | MXDA | | 0.01 | 0.4 | 2.5 |
| | | EC303 | | | | |
| | Amine catalyst | DBU | | | | |
| | Thickener | SH-290 | | | | |
| | | RCM-100 | | | | |
| | Organic amine compound used Molecular weight | | 142.24 | 136.2 | 136.2 | 136.2 |
| | Organic amine compound used Type | | Primary alicyclic | Primary aromatic | Primary aromatic | Primary aromatic |
| At a time of discharge | | Evaluation | D | A | A | D |
| Sagging of coating film | 25°C | | A | D | A | A |
| | 80°C | | A | D | A | A |
| | 200°C | | A | D | A | A |
| At a time of discharge | | Viscosity mPa·s | Cured | 2,500 | 52,000 | Cured |
| Immediately after application | 25°C | | Cured | 2,100 | 93,000 | Cured |
| | 80°C | | Cured | Less than 2,000 | 99,000 | Cured |
| | 200°C | | Cured | Less than 2,000 | 131,000 | Cured |

**Table 1-Continued**

| | | | Comparative Example 15 | Comparative Example 16 | Comparative Example 17 | Comparative Example 18 | Comparative Example 19 | Comparative Example 20 |
|---|---|---|---|---|---|---|---|---|
| | Macromolecular polyol | Capa7203 | 17 | 17 | 17 | 17 | 17 | 17 |
| | | G4672 | | | | | | |
| | Chain extender | 14BG | 4.3 | 4.3 | 4.3 | 4.3 | 4.3 | 4.3 |
| | Isocyanate | MP-102 | 22 | 22 | 22 | 22 | 22 | 22 |
| | | Coronate MX | | | | | | |
| | | IPDI | | | | | | |
| | Amine | DETDA | | | | | | |
| | | NBDA | | | | | | |
| Component | | EC331 | | | | | | |
| | | 1'3-BAC | | | | | | |
| | | 1'4-BACT | | | | | | |
| | | MXDA | | | | | | |
| | | EC303 | 2.5 | 5 | | | | |
| | Amine catalyst | DBU | | | 0.1 | 0.2 | | |
| | Thickener | SH-290 | | | | | 2.1 | |
| | | RCM-100 | | | | | | 0.4 |
| | Organic amine compound used Molecular weight | | 2000 | 2000 | 152.24 | 152.24 | - | - |
| | Organic amine compound used Type | | Primary aromatic | Primary aromatic | Tertiary hetero -cyclic | Tertiary hetero -cyclic | - | - |
| At a time of discharge | | Evaluation | A | A | A | D | A | A |
| Sagging of coating film | 25°C | | D | D | D | ○ | D | D |
| | 80°C | | D | D | D | ○ | D | D |
| | 200°C | | D | D | D | ○ | D | D |
| At a time of discharge | | Viscosity mPa·s | Less than 2,000 | Less than 2,000 | 2,000 | 1,500,000 | 7,850 | 2,500 |
| Immediately after application | 25°C | | Less than 2,000 | Less than 2,000 | 4,000 | Cured | 7,850 | 2,200 |
| | 80°C | | Less than 2,000 | Less than 2,000 | Less than 2,000 | Cured | 2,500 | Less than 2,000 |
| | 200°C | | Less than 2,000 | Less than 2,000 | Less than 2,000 | Cured | Less than 2,000 | Less than 2,000 |

From the above results, it is evident that the coating material of the present Example has excellent discharge characteristics from the coating device and can that sagging of the coating film after coating can be suppressed.

The reference signs will be described as follows.
- 10: Coating device
- 12: Support base
- 14: Dispenser
- 16: Mobile device

The entire disclosure of Japanese Patent Application No. 2022-197521 is incorporated herein by reference.

All the literature, patent applications, and technical standards cited herein are also incorporated herein by reference to the same extent as if each individual literature, patent application, and technical standard were specifically and individually indicated to be incorporated by reference.

## Claims

1. A coating material comprising:
a macromolecular polyol; and
an isocyanate: wherein
a viscosity of the coating material at a time of discharge from a coating device is less than 1,000,000 mPa·s, and
a viscosity of the coating material immediately after application to a surface to be coated that is at 25°C is more than 10,000 mPa·s.

2. The coating material according to claim 1, wherein a viscosity of the coating material immediately after application to a surface to be coated that is at 80°C is more than 10,000 mPa·s.

3. The coating material according to claim 1, wherein a viscosity of the coating material immediately after application to a surface to be coated that is at 200°C is more than 10,000 mPa·s.

4. The coating material according to claim 1, further comprising an organic amine compound.

5. The coating material according to claim 4, wherein the organic amine compound is an organic amine compound having a total of two or more of at least one of a primary amine group or a secondary amine group.

6. The coating material according to claim 5, wherein the organic amine compound having a total of two or more of at least one of a primary amine group or a secondary amine group is at least one selected from the group consisting of alicyclic amine compounds and aromatic amine compounds.

7. The coating material according to claim 5, wherein the organic amine compound having a total of two or more of at least one of a primary amine group or a secondary amine group has a molecular weight of 500 or less.

8. The coating material according to any one of claims 1 to 7, which is for use in a spring.

9. A method for forming a coating layer, the method comprising:
a step of applying the coating material according to any one of claims 1 to 8 to a surface to be coated of a rotating object to be coated by a coating device; and
a step of curing the coating material applied to the surface to be coated to form a coating layer.

10. The method for forming a coating layer according to claim 9, wherein the object to be coated is a spring.
